# EUROPÄISCHE PATENTSCHRIFT

(11) **EP 3 428 019 B1**
(45) Veröffentlichungstag und Bekanntmachung des Hinweises auf die Patenterteilung: **10.04.2024**
(21) Anmeldenummer: 18188247.3
(22) Anmeldetag: 02.05.2013
(51) Int. Cl.: B60R 25/20

(54) **VERFAHREN ZUR ANSTEUERUNG EINER VERSCHLUSSELEMENTANORDNUNG EINES KRAFTFAHRZEUGS**
METHOD FOR ACTIVATING A CLOSURE ELEMENT ASSEMBLY OF A MOTOR VEHICLE
PROCÉDÉ DE COMMANDE D'UN SYSTÈME D'ÉLÉMENT DE FERMETURE D'UN VÉHICULE AUTOMOBILE

(30) Priorität: 02.05.2012 DE 102012008530
(43) Veröffentlichungstag der Anmeldung: 16.01.2019
(62) Teilanmeldung aus: 13724162.6
(73) Patentinhaber: Brose Fahrzeugteile SE & Co. Kommanditgesellschaft, Bamberg, 96052 Bamberg (DE)
(72) Erfinder: Gunreben, Andre, 96103 Hallstadt (DE)
(74) Vertreter: Gottschald Patentanwälte Partnerschaft mbB

(56) Entgegenhaltungen:
- EP-A1- 1 902 912
- DE-A1-102004 048 329
- DE-A1-102010 036 646
- DE-U1-202006 013 335

## Beschreibung

Die Erfindung betrifft ein Verfahren zur Ansteuerung einer Verschlusselementanordnung eines Kraftfahrzeugs gemäß dem Oberbegriff von Anspruch 1 sowie eine Steuerungsanordnung zur Durchführung eines obigen Verfahrens gemäß Anspruch 14.

Die heutigen Kraftfahrzeuge sind zunehmend mit motorisch betätigbaren Verschlusselementen ausgestattet. Bei solchen Verschlusselementen kann es sich beispielsweise um Türen wie Seiten- und Hecktüren, insbesondere Schiebetüren, Klappen, insbesondere Heckklappen, Heckdeckel, Motorhauben, Laderaumböden o. dgl. eines Kraftfahrzeugs handeln. Insoweit ist der Begriff "Verschlusselement" vorliegend weit zu verstehen.

Eine Komfortfunktion, der heute zunehmende Bedeutung zukommt, ist die automatische Betätigung der motorischen Heckklappe eines Kraftfahrzeugs. Bei dem bekannten Verfahren (DE 20 2005 020 140 U1), von dem die Erfindung ausgeht, ist es vorgesehen, dass ein bedienerseitiges Bedienereignis, hier eine bedienerseitige Fußbewegung, das motorische Öffnen der Heckklappe bewirkt.

Das bekannte Verfahren bedient sich einer Steuerungsanordnung sowie einer Sensoranordnung, wobei im Rahmen einer Bedienereignisüberwachung mittels der Steuerungsanordnung die Sensormesswerte der Sensoranordnung daraufhin überwacht werden, ob ein vorbestimmtes Bedienereignis vorliegt.

Die Sensoranordnung weist zwei kapazitive Sensoren auf, die sich über die gesamte Breite des Kraftfahrzeugs erstrecken. Ein Bedienereignis, hier eine bedienerseitige Fußbewegung, lässt sich leicht elektronisch erfassen.

Eine andere bekannte Variante für die Ansteuerung einer Verschlusselementanordnung zeigt die EP 1 902 912 A1. Auch hier wird ein bedienerseitiges Bedienereignis in Form einer Fußbewegung erfasst.

Schwierigkeiten können sich ergeben, wenn im normalbetriebsgemäßen Gebrauch die mechanische Konfiguration des Kraftfahrzeugs durch einen Verstellvorgang oder durch einen Montagevorgang verändert wird. Eine solche Konfigurationsänderung kann beispielsweise auf die Montage bzw. Verstellung von Anhängerkupplungen, Fahrradhaltern, Dachgepäckträgern o. dgl. zurückgehen. Grundsätzlich kann es vorkommen, dass diese Kraftfahrzeugkomponenten die sensorische Erfassung der Bedienereignisse durch die Sensoranordnung stören. Dies gilt insbesondere für den Fall, dass die Steuerungsanordnung und die Sensoranordnung auf eine ganz bestimmte Konfiguration hin, insbesondere auf eine Konfiguration ohne Anhängerkupplung o. dgl. hin, optimiert sind.

Der Erfindung liegt das Problem zugrunde, das bekannte Verfahren derart auszugestalten und weiterzubilden, dass eine robuste Bedienereignisüberwachung auch bei einer Änderung der Konfiguration des Kraftfahrzeugs gewährleistet ist.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass die Bedienereignisüberwachung auf die mechanische Konfiguration des Kraftfahrzeugs angepasst werden kann, um zu optimalen Überwachungsergebnissen zu gelangen.

Im Einzelnen wird vorgeschlagen, dass mittels der Steuerungsanordnung zunächst die mechanische Konfiguration des Kraftfahrzeugs erfasst wird und dass daraufhin die Bedienereignisüberwachung in Abhängigkeit von der jeweils ermittelten mechanischen Konfiguration des Kraftfahrzeugs modifiziert wird. Dies bedeutet ganz allgemein, dass eine Konfigurationsänderung des Kraftfahrzeugs zu einer Modifikation der Bedienereignisüberwachung führen kann, um auch nach der Konfigurationsänderung ein gutes Überwachungsergebnis zu gewährleisten. Der Begriff "Modifikation" der Bedienereignisüberwachung ist vorliegend weit zu verstehen. Er umfasst ganz allgemeine eine Änderung der Parametrierung der Bedienereignisüberwachung.

Die Erfassung der mechanischen Konfiguration kann beispielsweise durch Sensoren erfolgen, die der jeweiligen Kraftfahrzeugkomponente zugeordnet sind. Denkbar ist auch, dass Konfigurationsänderungen durch motorische Verstellungen vorgenommen werden, die von der Steuerungsanordnung ausgelöst und registriert werden.

Bei der besonders bevorzugten Ausgestaltung gemäß Anspruch 3 besteht eine Konfigurationsänderung beispielsweise darin, dass eine Anhängerkupplung in eine Betriebsstellung ausgefahren wird oder an das Kraftfahrzeug entsprechend montiert wird. Vor allem in dem Fall, dass es sich bei dem zu überwachenden Bedienereignis um eine Fußbewegung des Bedieners handelt, kann es auftreten, dass eine die Anhängerkupplung betreffende Konfigurationsänderung zu Abschattungs- und Reflektionseffekten führt (Anspruch 5), die das Überwachungsergebnis beeinträchtigen.

Bevorzugte Maßnahmen zur Modifikation der Bedienereignisüberwachung zeigen die Ansprüche 6 bis 13. Hier wird das vorliegend breite Verständnis des Begriffs "Modifikation" der Bedienereignisüberwachung deutlich. Die Modifikation reicht von einer Änderung von Schwellwerten (Anspruch 6) bis hin zu einer Änderung der Ansteuerung der Sensoranordnung (Ansprüche 11, 13).

Nach einer weiteren Lehre gemäß Anspruch 14, der eigenständige Bedeutung zukommt, wird eine Steuerungsanordnung zur Durchführung des vorschlagsgemäßen Verfahrens beansprucht.

Auf alle Ausführungen zu dem vorschlagsgemäßen Verfahren, die geeignet sind, die Steuerungsanordnung zu erläutern, darf verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einer vorschlagsgemäßen Verschlusselementanordnung zur Durchführung des vorschlagsgemäßen Verfahrens,
- Fig. 2: eine Sequenz eines vorschlagsgemäßen, zu erfassenden Bedienereignisses in den fünf Stufen a) bis e),
- Fig. 3: die Signalverläufe zweier Sensorelemente während eines Bedienereignisses gemäß Fig. 2 a), b) bei demontierter Anhängerkupplung und c), d) bei in der Betriebsstellung befindlichen Anhängerkupplung und
- Fig. 4: in ganz schematischer Darstellung einen Ausschnitt aus der Heckschürze des Heckbereichs gemäß Fig. 1 in einer stirnseitigen Ansicht a) bei demontierter Anhängerkupplung und b) bei in der Betriebsstellung befindlicher Anhängerkupplung.

Das vorschlagsgemäße Verfahren wird im Folgenden anhand einer Verschlusselementanordnung 1 eines Kraftfahrzeugs erläutert, die ein als Heckklappe ausgestaltetes Verschlusselement 2 aufweist. Die Ausgestaltung des Verschlusselements 2 als Heckklappe eines Kraftfahrzeugs ist vorliegend bevorzugt. Allerdings darf im Hinblick auf das weite Verständnis des Begriffs "Verschlusselement" auf den einleitenden Teil der Beschreibung verwiesen werden. Insoweit gelten alle Ausführungen zu einer Heckklappe 2 entsprechend für alle anderen Arten von Verschlusselementen.

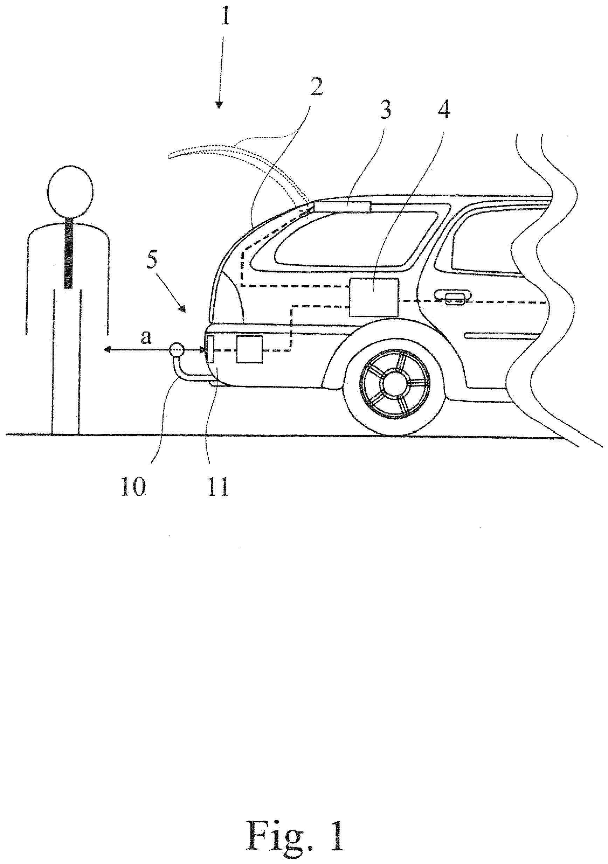

Der Heckklappe 2 ist eine Antriebsanordnung 3 zugeordnet, mittels der eine motorische Verstellung der Heckklappe 2 zwischen der in Fig. 1 in durchgezogener Linie dargestellten Schließstellung und der in Fig. 1 in gestrichelter Linie dargestellten Offenstellung bewirkbar ist.

Es ist ferner eine Steuerungsanordnung 4 vorgesehen, die unter anderem der Ansteuerung der Antriebsanordnung 3 dient. Mit der Steuerungsanordnung 4 kommuniziert eine Sensoranordnung 5 mit mindestens einem als Näherungssensor ausgestalteten Sensorelement 6, 7. Die noch zu erläuternde Sensoranordnung 5 ist so ausgelegt, dass mit ihr Bedienerbewegungen sensorisch erfassbar sind.

Bei dem dargestellten und insoweit bevorzugten Ausführungsbeispiel weist die Steuerungsanordnung 4 eine zentrale Hardwarestruktur auf. Denkbar ist aber auch, dass die Steuerungsanordnung 4 eine dezentrale Hardwarestruktur aufweist. In diesem Fall ist ein Teil der Steuerungshardware vorzugsweise in der Sensoranordnung 5 untergebracht. Dies bedeutet, dass die Sensoranordnung 5 eine eigene Intelligenz aufweist, die beispielsweise der Signalvorverarbeitung dienen kann.

Bestimmte Bedienerbewegungen sind hier als Bedienereignisse definiert, die jeweils eine bestimmte Reaktion der Steuerungsanordnung 4 auslösen sollen. Vorzugsweise handelt es sich bei dem Bedienereignis um eine noch zu erläuternde Fußbewegung des Bedieners.

Um auf das Vorliegen von Bedienereignissen wie oben angesprochen reagieren zu können, ist eine Bedienereignisüberwachung vorgesehen, die von der Steuerungsanordnung 4 durchgeführt wird. Im Rahmen der Bedienereignisüberwachung werden mittels der Steuerungsanordnung 4 die Sensormesswerte 8, 9 der Sensoranordnung 5 daraufhin überwacht, ob ein vorbestimmtes Bedienereignis vorliegt oder nicht. Bei den Sensorereignissen kann es sich um beliebige Abweichungen der Sensormesswerte 8, 9 von dem Leerlauf-Sensormesswerten handeln. Die Leerlauf-Sensormesswerte 8, 9 liegen vor, wenn keine äußere Beeinflussung der Sensoranordnung 5 durch einen Bediener o. dgl. vorliegt. In Abhängigkeit vom Ergebnis der Bedienereignisüberwachung wird eine entsprechende Ansteuerung der Antriebsanordnung 3, beispielsweise das motorische Öffnen der Heckklappe 2, vorgenommen.

Im normalbetriebsgemäßen Gebrauch lässt sich die mechanische Konfiguration des Kraftfahrzeugs durch einen Verstellvorgang und/oder durch einen Montagevorgang in noch zu erläuternder Weise verändern. Der Begriff "normalbetriebsgemäßer Gebrauch" bedeutet, dass eine Veränderung der mechanischen Konfiguration des Kraftfahrzeugs möglich ist, ohne eine die Wartung des Kraftfahrzeugs durchführende Werkstatt aufsuchen zu müssen.

Die mechanische Konfiguration des Kraftfahrzeugs läßt sich steuerungstechnisch mittels der Steuerungsanordnung 4 erfassen, indem der betreffenden Kraftfahrzeugkomponente ein entsprechender Statussensor zugeordnet ist, der von der Steuerungsanordnung 4 ausgelesen werden kann. Auch ein rein steuerungstechnisches Nachhalten der Konfiguration ist wie oben erläutert denkbar.

Wesentlich ist nun, dass mittels der Steuerungsanordnung 4 die mechanische Konfiguration des Kraftfahrzeugs erfasst wird und dass die Bedienereignisüberwachung in Abhängigkeit von der mechanischen Konfiguration des Kraftfahrzeugs modifiziert wird. Damit lässt sich in noch zu erläuternder Weise erreichen, dass ein gutes Überwachungsergebnis auch nach einer Konfigurationsänderung des Kraftfahrzeugs gewährleistet ist.

Die mechanische Konfiguration des Kraftfahrzeugs im vorliegenden Sinne kann eine Vielzahl von Teilkonfigurationen umfassen. Beispielsweise umfasst die mechanische Konfiguration des Kraftfahrzeugs hier und vorzugsweise die mechanische Konfiguration des Verschlusselements 2, hier der Heckklappe 2 des Kraftfahrzeugs.

Weiter ist es hier und vorzugsweise so, dass eine Anhängerkupplung 10 im Wege einer Konfigurationsänderung in eine Betriebsstellung ausfahrbar ist. Denkbar ist auch, dass die Anhängerkupplung 10 vor deren Benutzung an das Kraftfahrzeug in eine Betriebsstellung montierbar ist. Alternativ oder zusätzlich kann es vorgesehen sein, dass eine Konfigurationsänderung darin besteht, dass ein Fahrradträger an das Kraftfahrzeug in eine Betriebsstellung montiert wird.

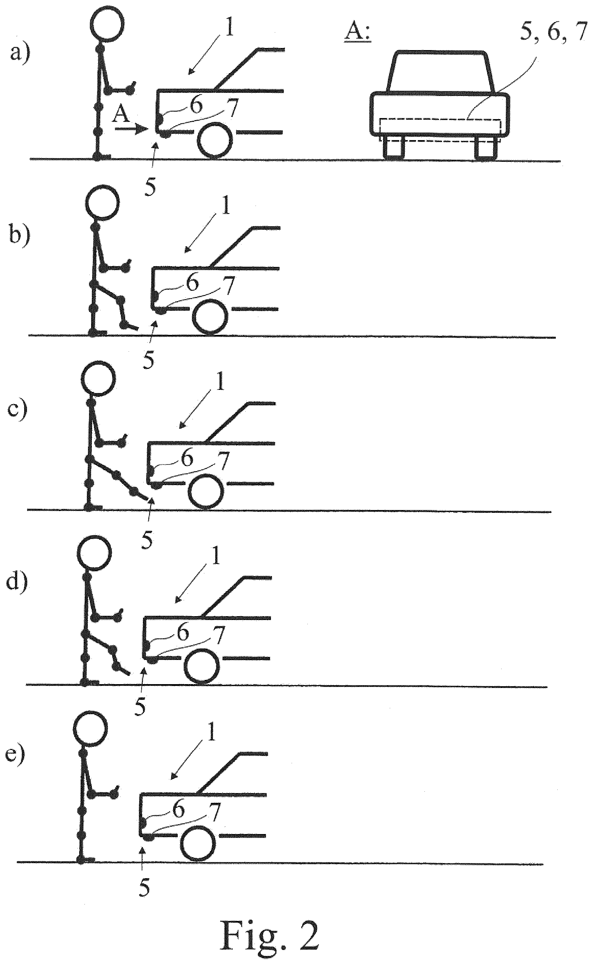

Bei dem dargestellten und insoweit bevorzugten Ausführungsbeispiel ist mindestens ein Bedienereignis als Fußbewegung des Bedieners definiert. Dabei ist mindestens ein Sensorelement 6, 7 in oder an einem hinteren Verkleidungsteil 11, hier und vorzugsweise dem hinteren Stoßfänger 11, des Kraftfahrzeugs angeordnet. Das mindestens eine Sensorelement 6, 7 erstreckt sich vorzugsweise über einen wesentlichen Teil der Breite des Kraftfahrzeugs, wie der Darstellung gemäß Fig. 2a) zu entnehmen ist.

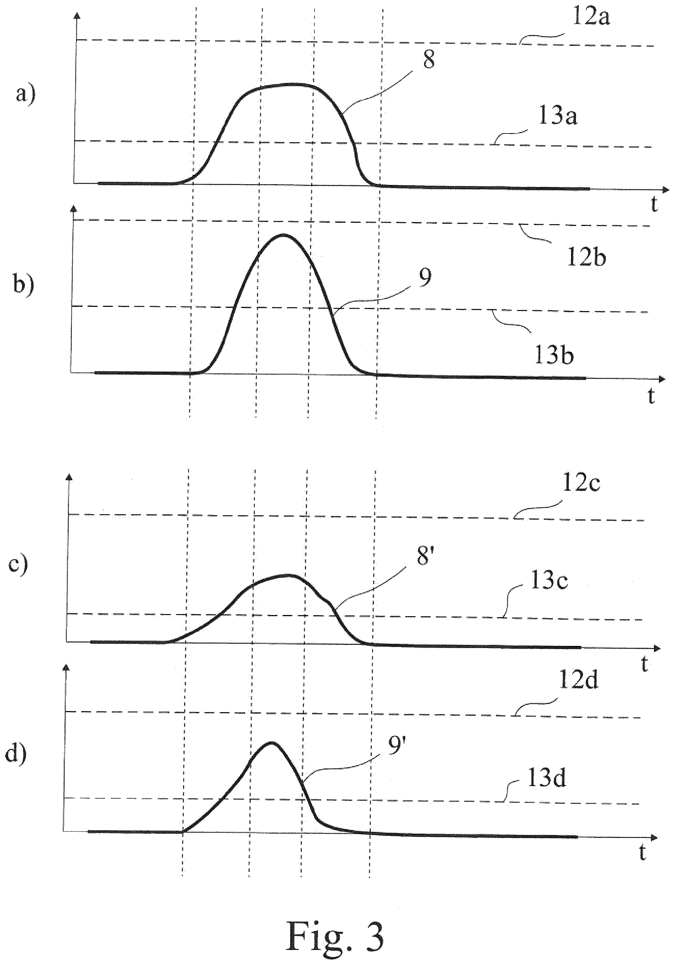

Im Einzelnen ist es vorzugsweise so, dass mindestens ein Bedienereignis als eine Hin- und Rückbewegung des Fußes des Bedieners definiert ist. Fig. 2 zeigt in den Abbildungen a) bis e) die Stationen der Sequenz eines solchen Bedienereignisses, das eine Hin- und Rückbewegung des Fußes des Bedieners umfasst. Fig. 3a), b) zeigt die resultierenden Sensorereignisse in den Sensormesswerten 8, 9 der beiden Sensorelemente 6, 7 für den Fall, dass die Anhängerkupplung 10 weggeschwenkt oder demontiert ist. Fig. 3c), d) zeigt die resultierenden Sensorereignisse in den Sensormesswerten 8', 9' der beiden Sensorelemente 6, 7 für den Fall, dass die Anhängerkupplung 10 in ihre in Fig. 1 dargestellte Betriebsstellung verschwenkt ist.

Es lässt sich der Darstellung gemäß Fig. 3 die Tatsache entnehmen, dass während des Bedienereignisses das mindestens eine Sensorelement 6, 7 einen impulsartigen zeitlichen Verlauf der Sensormesswerte 8, 9 erzeugt. Dieser impulsartige zeitliche Verlauf wird vorliegend als "Sensorimpuls" bezeichnet.

Es wurde schon darauf hingewiesen, dass der Begriff "Modifikation" der Bedienereignisüberwachung weit auszulegen ist, so dass eine Vielzahl von Möglichkeiten für diese Modifikation bestehen. Im Folgenden werden eine Reihe bevorzugter Modifikationen erläutert.

Es ergibt sich bereits aus der Darstellung gemäß Fig. 1, dass eine Konfigurationsänderung, hier die Verstellung oder Montage der Anhängerkupplung 10 in eine Betriebsstellung, eine Abschwächung von Sensormesswerten 8, 9/8', 9' durch Abschaffungs- und Reflektionseffekte o. dgl. bewirken wird. Dies ergibt auch ein Vergleich der Fig. 3a), b) und Fig. 3c), d). Hier wird deutlich, dass der jeweilige Signalpegel durch die in der Betriebsstellung stehende Anhängerkupplung 10 beträchtlich reduziert ist.

Der oben beschriebenen Abschwächung der Sensormesswerte 8, 9 kann durch eine besonders einfache Modifikation der Bedienereignisüberwachung Rechnung getragen werden. Dabei wird zunächst einmal davon ausgegangen, dass die Erfassung von Sensormesswerten 8, 9, hier und vorzugsweise von Sensorimpulsen, oberhalb einer Oberschwelle 12 und/oder unterhalb einer Unterschwelle 13 keinem Bedienereignis zugeordnet wird. Sensormesswerte 8, 9 unterhalb der Unterschwelle 13 treten beispielsweise durch vorbeilaufende Personen o. dgl. auf, während sich Sensormesswerte 8, 9 oberhalb der Oberschwelle 12 durch eine Wischbewegung auf dem Verkleidungsteil 11 ergeben können. Im Sinne einer robusten Bedienereignisüberwachung werden Sensormesswerte 8, 9 oberhalb der Oberschwelle 12 und unterhalb der Unterschwelle 13 praktisch ausgeblendet.

Würden beispielsweise bei einer Verstellung der Anhängerkupplung 10 in ihre Betriebsstellung die Werte für die Oberschwelle 12 und die Unterschwelle 13 beibehalten, so wäre eine reproduzierbare Bedienereignisüberwachung nicht möglich, da sich die resultierenden Sensormesswerte 8', 9' stets im Bereich der jeweiligen Unterschwelle 13 bewegen würden und damit zufallsbedingt ausgeblendet oder eben nicht ausgeblendet würden. Daher wird vorgeschlagen, in Abhängigkeit von der Konfiguration des Kraftfahrzeugs die jeweilige Oberschwelle 12 und/oder die Unterschwelle 13 zu verändern. Im Einzelnen wird vorzugsweise vorgeschlagen, dass bei einer Verstellung oder Montage einer Anhängerkupplung 10 in ihre Betriebsstellung die Oberschwelle 12 und/oder die Unterschwelle 13 herabgesetzt wird bzw. werden. Die herabgesetzten Oberschwellen 12 und Unterschwellen 13 sind in Fig. 3c), d) dargestellt. Die Oberschwellen 12 und Unterschwellen 13 zu den beiden Sensorelementen 6, 7 sind unterschiedlich, was in Fig. 3 durch die Bezugszeichen 12a-d und 13a-d angedeutet ist. Bei den vorliegenden Erläuterungen werden im Sinne einer übersichtlichen Darstellungen nur die Bezugszeichen 12, 13 genutzt.

Ein Beispiel für die Modifikation der Bedienereignisüberwachung in Abhängigkeit von der mechanischen Konfiguration des Verschlusselements 2, hier der Stellung der Heckklappe 2, besteht darin, dass bei in der Offenstellung befindlicher Heckklappe 2 die Bedienereignisüberwachung derart angepasst wird, dass die herabhängenden und ggf. pendelnden Beine einer in der Heckklappenöffnung sitzenden Person im Rahmen der Bedienereignisüberwachung nicht als Bedienereignis erfasst werden. Damit kann wirksam verhindert werden, dass Personen, die in der Heckklappenöffnung sitzen, im Rahmen eines ungewünschten, motorischen Schließvorgangs gefährdet werden.

Es wird davon ausgegangen, dass einem Bedienereignis ein Bedienereignismodell aus Signal-Kennwerten zugeordnet ist, wobei im Rahmen der Bedienereignisüberwachung mittels der Steuerungsanordnung 4 überwacht wird, ob die Sensonnesswerte 8, 9 zu den Signal-Kennwerten des Bedienereignismodells korrespondieren. Ein solches Bedienereignismodell repräsentiert gewissermaßen die Form bzw. den Verlauf der Sensormesswerte 8, 9 während eines Bedienereignisses. Es wird nun vorgeschlagen, dass das Bedienereignismodell in Abhängigkeit von der mechanischen Konfiguration des Kraftfahrzeugs erzeugt oder in Abhängigkeit von der mechanischen Konfiguration des Kraftfahrzeugs aus einer Anzahl gespeicherter Bedienereignismodelle ausgewählt oder in Abhängigkeit von der mechanischen Konfiguration des Kraftfahrzeugs parametriert wird.

Im einfachsten Fall ist einem Bedienereignis ein Bedienereignis-Kennwertsatz aus Signal-Kennwerten zugeordnet, die wiederum im Rahmen der Bedienereignisüberwachung mit den Sensormesswerten 8, 9 abgeglichen werden. Bei dem Bedienereignis-Kennwertsatz handelt es sich um eine einfache Form eines Bedienereignismodells. Vorschlagsgemäß wird entsprechend eine Modifikation des Bedienereignis-Kennwertsatzes in Abhängigkeit von der mechanischen Konfiguration des Kraftfahrzeugs vorgeschlagen.

Wie oben erläutert, erzeugt mindestens ein Bedienereignis einen impulsartigen zeitlichen Verlauf von Sensormesswerten 8, 9 mindestens eines Sensorelements 6, 7, wobei hier und vorzugsweise mindestens ein oben genannter Signal-Kennwert als Breite und/oder als Höhe und/oder als Flankensteilheit und/oder als Krümmung von Teilen der Sensorimpulse und/oder als zeitlicher Versatz zweier Sensorimpulse eines Sensorelements 6, 7 definiert ist bzw. sind.

Die Modifikation der Bedienereignisüberwachung kann in einer weiteren bevorzugten Ausführungsform das Signalverarbeitungsverfahren betreffen, auf dem die Ermittlung der Sensormesswerte 8, 9 mittels der Steuerungsanordnung 4 basiert. Dabei ist es vorgesehen, dass das Signalverarbeitungsverfahren durch einen Signalverarbeitungs-Parametersatz mit Signalverarbeitungs-Parametern wie Mindest-Signalpegel, zeitlicher Messauflösung oder Amplituden-Messauflösung definiert wird. Vorschlagsgemäß ist es vorzugsweise so, dass der Signalverarbeitungs-Parametersatz in Abhängigkeit von der mechanischen Konfiguration des Kraftfahrzeugs aus einer Anzahl gespeicherter Signalverarbeitungs-Parametersätze ausgewählt oder in Abhängigkeit von der mechanischen Konfiguration des Kraftfahrzeugs parametriert wird. Beispielsweise kann es vorgesehen sein, dass bei in der Betriebsstellung befindlicher Anhängerkupplung 10 der Mindest-Signalpegel, der steuerungstechnisch überhaupt weiterverarbeitet wird, heruntergesetzt und die zeitliche Messauflösung und die Amplituden-Messauflösung heraufgesetzt werden, um dem vergleichsweise geringen Signalpegel bei in der Betriebsstellung befindlicher Anhängerkupplung 10 Rechnung zu tragen.

Denkbar ist auch, dass die Modifikation der Bedienereignisüberwachung die Auswertung der digitalisierten Sensormesswerte 8, 9 betrifft. Im Einzelnen umfasst dabei die Bedienereignisüberwachung zunächst die Digitalisierung der Sensormesswerte 8, 9, wobei die anschließende Auswertung der digitalisierten Messdaten, insbesondere der Abgleich mit einem Bedienereignis-Kennwertsatz, basierend auf einem entsprechenden Auswerteverfahren durchgeführt wird. Das Auswerteverfahren wird durch einen Auswerte-Parametersatz mit Auswerte-Parametern wie der Rechengenauigkeit oder der Art des Abgleichalgorithmus, definiert. Auch hier wird vorgeschlagen, dass der Auswerte-Parametersatz in Abhängigkeit von der mechanischen Konfiguration des Kraftfahrzeugs aus einer Anzahl gespeicherter Auswerte-Parametersätze ausgewählt oder in Abhängigkeit von der mechanischen Konfiguration des Kraftfahrzeugs parametriert wird. Beispielsweise kann es vorteilhaft sein, die Rechengenauigkeit hochzusetzen, wenn sich die Anhängerkupplung 10 in ihrer Bedienstellung befindet, um dem oben angesprochenen, vergleichsweise geringen Signalpegel Rechnung zu tragen.

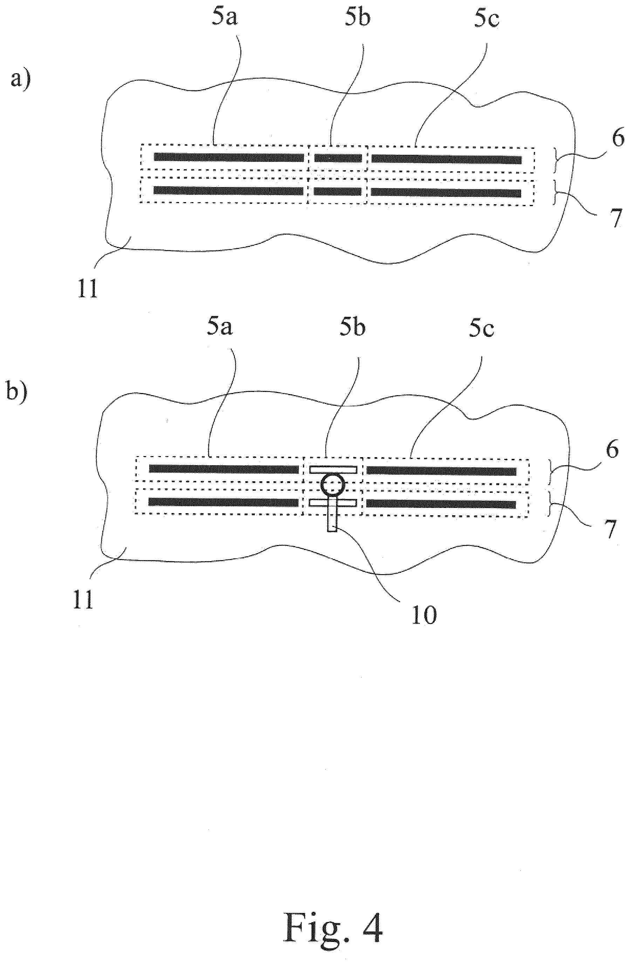

Die vorschlagsgemäße Modifikation der Bedienereignisüberwachung kann grundsätzlich auch die Ansteuerung der Sensoranordnung 5 betreffen. Der Begriff "Ansteuerung" ist dabei weit zu verstehen und betrifft alle steuerungstechnischen Maßnahmen, die zur Ermittlung der Sensormesswerte 8, 9 führen. Im Einzelnen wird dabei vorgeschlagen, dass im Rahmen der Bedienereignisüberwachung die Sensoranordnung 5 mittels der Steuerungsanordnung 4 in Abhängigkeit von der mechanischen Konfiguration des Kraftfahrzeugs angesteuert wird. Ein Beispiel hierfür wird im Folgenden anhand von Fig. 4 erläutert.

Gemäß Fig. 4 ist die Sensoranordnung 5 in oder an einem hinteren Verkleidungsteil 11, hier und vorzugsweise dem hinteren Stoßfänger 11, des Kraftfahrzeugs angeordnet, wobei sich die Sensoranordnung 5 weiter vorzugsweise über einen wesentlichen Teil der Breite des Kraftfahrzeugs erstreckt.

Die Sensoranordnung 5 ist länglich ausgestaltet und weist über ihre Länge mindestens zwei Sensorabschnitte 5a, 5b, 5c auf, die separat voneinander mittels der Steuerungsanordnung 4 ansteuerbar sind. Im einfachsten Fall bedeutet dies, dass die einzelnen Sensorabschnitte 5a, 5b, 5c einzeln auslesbar sind.

Wesentlich bei der letztgenannten Variante ist die Tatsache, dass die Sensorabschnitte 5a, 5b, 5c einzeln, in Gruppen oder insgesamt in Abhängigkeit von der Konfiguration des Kraftfahrzeugs angesteuert werden.

Bei dem in Fig. 4 dargestellten und insoweit bevorzugten Ausführungsbeispiel sind insgesamt drei Sensorabschnitte 5a, 5b, 5c vorgesehen, von denen beidseits der Anhängerkupplung 10 die Sensorabschnitte 5a, 5c und im Bereich der Anhängerkupplung 10 der Sensorabschnitt 5b angeordnet sind. Bei in der Betriebsstellung befindlicher Anhängerkupplung 10 werden vorzugsweise ausschließlich die beidseits der Anhängerkupplung 10 befindlichen Sensorabschnitte 5a, 5c der Sensoranordnung 5 angesteuert. Dies ist bei der in Fig. 4b) dargestellten Konfiguration des Kraftfahrzeugs der Fall.

Im Übrigen, also bei der in Fig. 4a) dargestellten Konfiguration des Kraftfahrzeugs, sind hier und vorzugsweise alle Sensorabschnitte 5a, 5b, 5c der Sensoranordnung 5 angesteuert. Das ist auch sachgerecht, da der in Fig. 4 mittlere Sensorabschnitt 5b bei weggeschwenkter oder demontierter Anhängerkupplung 10 unbeeinflusst von der Anhängerkupplung 10 arbeitet. Bei der in Fig. 4b) dargestellten Konfiguration ist zu erwarten, dass die Sensormesswerte 8, 9 der mittleren Sensoranordnung 5b durch die Anhängerkupplung 10 abgeschwächt werden und insoweit vergleichsweise geringfügig zu der Bedienereignisüberwachung beitragen können.

Nach einer weiteren Lehre, der eigenständige Bedeutung zukommt, wird die vorschlagsgemäße Steuerungsanordnung 4 als solche beansprucht. Auf alle Ausführungen, die geeignet sind, die Steuerungsanordnung zu erläutern, darf verwiesen werden.

## Patentansprüche

1. Verfahren zur Ansteuerung einer Verschlusselementanordnung (1) eines Kraftfahrzeugs, wobei die Verschlusselementanordnung (1) ein Verschlusselement (2), eine dem Verschlusselement (2) zugeordnete Antriebsanordnung (3), eine Steuerungsanordnung (4) sowie eine Sensoranordnung (5) mit mindestens einem insbesondere als Näherungssensor ausgestalteten Sensorelement (6, 7) aufweist, wobei im Rahmen einer Bedienereignisüberwachung mittels der Steuerungsanordnung (4) die Sensormesswerte (8, 9) der Sensoranordnung (5) daraufhin überwacht werden, ob ein vorbestimmtes Bedienereignis vorliegt, und in Abhängigkeit vom Ergebnis der Bedienereignisüberwachung eine Ansteuerung der Antriebsanordnung (3) vorgenommen wird, wobei die mechanische Konfiguration des Kraftfahrzeugs im normalbetriebsgemäßen Gebrauch durch einen Verstellvorgang und/oder durch einen Montagevorgang veränderbar ist,
**dadurch gekennzeichnet,**
**dass** mittels der Steuerungsanordnung (4) die mechanische Konfiguration des Kraftfahrzeugs erfasst wird und die Bedienereignisüberwachung in Abhängigkeit von der mechanischen Konfiguration des Kraftfahrzeugs modifiziert wird,
**dass** einem Bedienereignis ein Bedienereignismodell aus Signal-Kennwerten zugeordnet ist, dass im Rahmen der Bedienereignisüberwachung mittels der Steuerungsanordnung (4) überwacht wird, ob die Sensormesswerte (8, 9) zu den Signal-Kennwerten des Bedienereignismodells korrespondieren und dass das Bedienereignismodell in Abhängigkeit von der mechanischen Konfiguration des Kraftfahrzeugs erzeugt oder in Abhängigkeit von der mechanischen Konfiguration des Kraftfahrzeugs aus einer Anzahl gespeicherter Bedienereignismodelle ausgewählt oder in Abhängigkeit von der mechanischen Konfiguration des Kraftfahrzeugs parametriert wird.

2. Verfahren nach Anspruch 1, **dadurch gekennzeichnet, dass** die mechanische Konfiguration des Kraftfahrzeugs die mechanische Konfiguration des Verschlusselements (2), insbesondere die Stellung des Verschlusselements (2), umfasst.

3. Verfahren nach Anspruch 1 oder 2, **dadurch gekennzeichnet, dass** eine Anhängerkupplung (10) im Wege einer Konfigurationsänderung in eine Betriebsstellung ausfahrbar ist oder an das Kraftfahrzeug in eine Betriebsstellung montierbar ist, und/oder, dass ein Fahrradträger im Wege einer Konfigurationsänderung an das Kraftfahrzeug in eine Betriebsstellung montierbar ist.

4. Verfahren nach einem der vorhergehenden Ansprüche, **dadurch gekennzeichnet, dass** während des Bedienereignisses das mindestens eine Sensorelement (6, 7) einen impulsartigen zeitlichen Verlauf der Sensormesswerte (8, 9) - Sensorimpuls - erzeugt.

5. Verfahren nach einem der vorhergehenden Ansprüche, **dadurch gekennzeichnet, dass** eine vorbestimmte Konfigurationsänderung, insbesondere die Verstellung oder Montage einer Anhängerkupplung (10) in eine Betriebsstellung, eine Abschwächung von Sensormesswerten (8, 9) durch Abschattungs- und Reflektionseffekte bewirkt.

6. Verfahren nach einem der vorhergehenden Ansprüche, **dadurch gekennzeichnet, dass** die Bedienereignisüberwachung so ausgelegt ist, dass die Erfassung von Sensormesswerten (8, 9), insbesondere von Sensorimpulsen, oberhalb einer Oberschwelle (12) und/oder unterhalb einer Unterschwelle (13) keinem Bedienereignis zugeordnet wird und dass in Abhängigkeit von der Konfiguration des Kraftfahrzeugs die Oberschwelle (12) und/oder die Unterschwelle (13) verändert wird bzw. werden, vorzugsweise, dass bei einer Verstellung oder Montage einer Anhängerkupplung (10) in eine Betriebsstellung die Oberschwelle (12) und/oder die Unterschwelle (13) herabgesetzt wird bzw. werden.

7. Verfahren nach einem der vorhergehenden Ansprüche, **dadurch gekennzeichnet, dass** einem Bedienereignis ein Bedienereignis-Kennwertsatz aus Signal-Kennwerten zugeordnet ist, dass im Rahmen der Bedienereignisüberwachung mittels der Steuerungsanordnung (4) überwacht wird, ob die Sensormesswerte (8, 9) zu den Signal-Kennwerten des Bedienereignis-Kennwertsatzes korrespondieren und dass der Bedienereignis-Kennwertsatz in Abhängigkeit von der mechanischen Konfiguration des Kraftfahrzeugs erzeugt oder in Abhängigkeit von der mechanischen Konfiguration des Kraftfahrzeugs aus einer Anzahl gespeicherter Bedienereignis-Kennwertsätze ausgewählt oder in Abhängigkeit von der mechanischen Konfiguration des Kraftfahrzeugs parametriert wird.

8. Verfahren nach einem der vorhergehenden Ansprüche, **dadurch gekennzeichnet, dass** mindestens ein Bedienereignis einen impulsartigen zeitlichen Verlauf von Sensormesswerten (8, 9) mindestens eines Sensorelements (6, 7) erzeugt und dass mindestens ein Signal-Kennwert als Breite und/oder als Höhe und/oder als Flankensteilheit und/oder als Krümmung von Teilen der Sensorimpulse und/oder als zeitlicher Versatz zweier Sensorimpulse eines Sensorelements (6, 7) definiert ist bzw. sind.

9. Verfahren nach einem der vorhergehenden Ansprüche, **dadurch gekennzeichnet, dass** im Rahmen der Bedienereignisüberwachung die Ermittlung der Sensormesswerte (8,9) mittels der Steuerungsanordnung (4) basierend auf einem Signalverarbeitungsverfahren durchgeführt wird, dass das Signalverarbeitungsverfahren durch einen Signalverarbeitungs-Parametersatz mit Signalverarbeitungs-Parametern wie Mindest-Signalpegel, zeitlicher Messauflösung oder Amplituden-Messauflösung definiert wird und dass der Signalverarbeitungs-Parametersatz in Abhängigkeit von der mechanischen Konfiguration des Kraftfahrzeugs aus einer Anzahl gespeicherter Signalverarbeitungs-Parametersätze ausgewählt oder in Abhängigkeit von der mechanischen Konfiguration des Kraftfahrzeugs parametriert wird.

10. Verfahren nach einem der vorhergehenden Ansprüche, **dadurch gekennzeichnet, dass** die Bedienereignisüberwachung eine Digitalisierung der Sensormesswerte (8, 9) umfasst und dass die anschließende Auswertung der digitalisierten Messdaten, insbesondere den Abgleich mit dem Bedienereignis-Kennwertsatz, basierend auf einem Auswerteverfahren durchgeführt wird, dass das Auswerteverfahren durch einen Auswerte-Parametersatz mit Auswerte-Parametern wie der Rechengenauigkeit oder der Art des Abgleichalgorithmus, definiert wird und dass der Auswerte-Parametersatz in Abhängigkeit von der mechanischen Konfiguration des Kraftfahrzeugs aus einer Anzahl gespeicherter Auswerte-Parametersätze ausgewählt oder in Abhängigkeit von der mechanischen Konfiguration des Kraftfahrzeugs parametriert wird.

11. Verfahren nach einem der vorhergehenden Ansprüche, **dadurch gekennzeichnet, dass** im Rahmen der Bedienereignisüberwachung die Sensoranordnung (5) mittels der Steuerungsanordnung (4) in Abhängigkeit von der mechanischen Konfiguration des Kraftfahrzeugs angesteuert wird, vorzugsweise, dass die Sensoranordnung (5) in oder an einem hinteren Verkleidungsteil (11), insbesondere dem hinteren Stoßfänger (11), des Kraftfahrzeugs angeordnet ist.

12. Verfahren nach Anspruch 11, **dadurch gekennzeichnet, dass** sich die Sensoranordnung (5) über einen wesentlichen Teil der Breite des Kraftfahrzeugs erstreckt, dass die Sensoranordnung (5) länglich ausgestaltet ist und über ihre Länge mindestens zwei Sensorabschnitte (5a, 5b, 5c) aufweist, die separat voneinander mittels der Steuerungsanordnung (4) ansteuerbar sind und dass die Sensorabschnitte (5a, 5b, 5c) einzeln, in Gruppen oder insgesamt in Abhängigkeit von der Konfiguration des Kraftfahrzeugs angesteuert werden.

13. Verfahren nach Anspruch 12 **dadurch gekennzeichnet, dass** die Sensoranordnung (4) beidseits der Anhängerkupplung (10) Sensorabschnitte (5a, 5c) und im Bereich der Anhängerkupplung (10) mindestens einen Sensorabschnitt (5b) aufweist und dass bei in die Betriebsstellung verstellter oder montierter Anhängerkupplung (10) ausschließlich die beidseits der Anhängerkupplung (10) befindlichen Sensorabschnitte (5a, 5c) der Sensoranordnung (4) angesteuert werden und dass im Übrigen jedenfalls auch der mindestens eine im Bereich der Anhängerkupplung (10) befindliche Sensorabschnitt (5b) der Sensoranordnung (4) angesteuert wird.

14. Steuerungsanordnung (4) zur Durchführung eines Verfahrens nach einem der vorhergehenden Ansprüche.

## Claims

1. Method for actuating a closure element arrangement (1) of a motor vehicle, wherein the closure element arrangement (1) has a closure element (2), a drive arrangement (3) which is assigned to the closure element (2), a control arrangement (4) and a sensor arrangement (5) with at least one sensor element (6, 7) which is configured, in particular, as a proximity sensor, wherein within the scope of an operator control event monitoring operation by means of the control arrangement (4) the sensor measured values (8, 9) of the sensor arrangement (5) are monitored to determine whether a predetermined operator control event is occurring, and the drive arrangement (3) is actuated as a function of the result of the operator control event monitoring operation, wherein the mechanical configuration of the motor vehicle can be changed in the normal operational use by means of an adjustment process and/or by means of a mounting process,
**characterized**
**in that** the mechanical configuration of the motor vehicle is sensed by means of the control arrangement (4), and the operator control event monitoring operation is modified as a function of the mechanical configuration of the motor vehicle,
**in that** an operator control event is assigned an operator control event model composed of signal characteristic values, in that within the scope of the operator control event monitoring operation it is monitored by means of the control arrangement (4) whether the sensor measured values (8, 9) correspond to the signal characteristic values of the operator control event model, and in that the operator control event model is generated as a function of the mechanical configuration of the motor vehicle or is selected from a number of stored operator control event models as a function of the mechanical configuration of the motor vehicle, or is parameterized as a function of the mechanical configuration of the motor vehicle.

2. Method according to Claim 1, **characterized in that** the mechanical configuration of the motor vehicle comprises the mechanical configuration of the closure element (2), in particular the position of the closure element (2).

3. Method according to Claim 1 or 2, **characterized in that** a trailer coupling (10) can be extended to an operating position within the course of a configuration change or can be mounted on the motor vehicle in an operating position, and/or **in that** a bicycle carrier can be mounted on the motor vehicle in an operating position within the course of a configuration change.

4. Method according to one of the preceding claims, **characterized in that**, during the operator control event, the at least one sensor element (6, 7) generates a pulse-like time profile of the sensor measured values (8, 9) - sensor pulse.

5. Method according to one of the preceding claims, **characterized in that** a predetermined configuration change, in particular the adjustment or mounting of a trailer coupling (10) in an operating position, brings about attenuation of sensor measured values (8, 9) by shading effects and reflection effects.

6. Method according to one of the preceding claims, **characterized in that** the operator control event monitoring operation is configured in such a way that the sensing of sensor measured values (8, 9), in particular of sensor pulses, above an upper threshold (12) and/or below a lower threshold (13) is not assigned to an operator control event, and **in that** the upper threshold (12) and/or the lower threshold (13) are/is changed as a function of the configuration of the motor vehicle, preferably **in that** in the case of adjustment or mounting of a trailer coupling (10) in an operating position the upper threshold (12) and/or the lower threshold (13) are/is reduced.

7. Method according to one of the preceding claims, **characterized in that** an operator control event is assigned an operator control event characteristic value set of signal characteristic values, **in that** within the scope of the operator control event monitoring operation it is monitored by means of the control arrangement (4) whether the sensor measured values (8, 9) correspond to the signal characteristic values of the operator control event characteristic value set, and **in that** the operator control event characteristic value set is generated as a function of the mechanical configuration of the motor vehicle, or is selected from a number of stored operator control event characteristic value sets as a function of the mechanical configuration of the motor vehicle, or is parameterized as a function of the mechanical configuration of the motor vehicle.

8. Method according to one of the preceding claims, **characterized in that** at least one operator control event generates a pulse-like time profile of sensor measured values (8, 9) of at least one sensor element (6, 7), and **in that** at least one signal characteristic value is defined as a width and/or as a height and/or as an edge steepness and/or as a curvature of parts of the sensor pulses and/or as a time between two sensor pulses of a sensor element (6, 7).

9. Method according to one of the preceding claims, **characterized in that** within the scope of the operator control event monitoring operation the sensor measured values (8, 9) are determined by means of the control arrangement (4) on the basis of a signal processing method, **in that** the signal processing method is defined by a signal processing parameter set with signal processing parameters such as minimum signal level, chronological measurement resolution or amplitude measurement resolution, and **in that** the signal processing parameter set is selected from a number of stored signal processing parameter sets as a function of the mechanical configuration of the motor vehicle, or is parameterized as a function of the mechanical configuration of the motor vehicle.

10. Method according to one of the preceding claims, **characterized in that** the operator control event monitoring operation comprises digitization of the sensor measured values (8, 9), and **in that** the subsequent evaluation of the digitized measured values, in particular the comparison with the operator control event characteristic value set, is carried out on the basis of an evaluation method, **in that** the evaluation method is defined by an evaluation parameter set with evaluation parameters such as the computational accuracy or the type of comparison algorithm, and **in that** the evaluation parameter set is selected from a number of stored evaluation parameter sets as a function of the mechanical configuration of the motor vehicle, or is parameterized as a function of the mechanical configuration of the motor vehicle.

11. Method according to one of the preceding claims, **characterized in that** within the scope of the operator control event monitoring operation the sensor arrangement (5) is actuated by means of the control arrangement (4) as a function of the mechanical configuration of the motor vehicle, preferably **in that** the sensor arrangement (5) is arranged in or on a rear trim part (11), in particular the rear bumper (11), of the motor vehicle.

12. Method according to Claim 11, **characterized in that** the sensor arrangement (5) extends over a significant part of the width of the motor vehicle, **in that** the sensor arrangement (5) is elongated and has, over its length, at least two sensor sections (5a, 5b, 5c) which can be actuated separately from one another by means of the control arrangement (4), and **in that** the sensor sections (5a, 5b, 5c) are actuated individually, in groups or altogether as a function of the configuration of the motor vehicle.

13. Method according to Claim 12, **characterized in that** the sensor arrangement (4) has sensor sections (5a, 5c) on both sides of the trailer coupling (10) and at least one sensor section (5b) in the region of the trailer coupling (10), and **in that** when the trailer coupling (10) is adjusted or mounted in the operating position the sensor sections (5a, 5c), located on both sides of the trailer coupling (10), of the sensor arrangement (4) are exclusively actuated, and **in that** otherwise the at least one sensor section (5b), located in the region of the trailer coupling (10), of the sensor arrangement (4) is also actuated in any case.

14. Control arrangement (4) for carrying out a method according to one of the preceding claims.

## Revendications

1. Procédé de commande d'un ensemble élément de fermeture (1) d'un véhicule automobile, dans lequel l'ensemble élément de fermeture (1) comporte un élément de fermeture (2), un ensemble d'entraînement (3) associé à l'élément de fermeture (2), un ensemble de commande (4) ainsi qu'un ensemble capteur (5) doté d'au moins un élément capteur (6, 7) conçu en particulier en tant que capteur de proximité, dans lequel les valeurs de mesure de capteur (8, 9) du dispositif de capteur (5) sont surveillées au moyen de l'ensemble de commande (4) dans le cadre d'une surveillance d'événements de service pour déterminer si un événement de service prédéfini est présent, et l'ensemble d'entraînement (3) est commandé en fonction du résultat de la surveillance d'événements de service, dans lequel la configuration mécanique du véhicule automobile peut être modifiée lors de l'utilisation en fonctionnement normal par un processus de réglage et/ou par un processus de montage,
**caractérisé**
**en ce que** la configuration mécanique du véhicule automobile est détectée au moyen de l'ensemble de commande (4) et la surveillance d'événements de service est modifiée en fonction de la configuration mécanique du véhicule automobile,
**en ce qu'**un modèle d'événement de service constitué de valeurs caractéristiques de signal est associé à un événement de service, en ce que, dans le cadre de la surveillance d'événements de service, l'ensemble de commande (4) surveille si les valeurs de mesure de capteur (8, 9) correspondent aux valeurs caractéristiques de signal du modèle d'événement de service, et en ce que le modèle d'événement de service est généré en fonction de la configuration mécanique du véhicule automobile ou est sélectionné parmi un certain nombre de modèles d'événements de service mémorisés en fonction de la configuration mécanique du véhicule automobile ou est paramétré en fonction de la configuration mécanique du véhicule automobile.

2. Procédé selon la revendication 1, **caractérisé en ce que** la configuration mécanique du véhicule automobile comprend la configuration mécanique de l'élément de fermeture (2), notamment la position de l'élément de fermeture (2).

3. Procédé selon la revendication 1 ou 2, **caractérisé en ce qu'**un attelage de remorque (10) peut être déployé en position de fonctionnement au titre d'une modification de configuration ou peut être monté sur le véhicule automobile en position de fonctionnement, et/ou **en ce qu'**un porte-bicyclette peut être monté sur le véhicule automobile en position de fonctionnement au titre d'une modification de configuration.

4. Procédé selon l'une des revendications précédentes, **caractérisé en ce que** pendant l'événement de service, l'au moins un élément capteur (6, 7) génère un profil temporel en forme d'impulsions des valeurs de mesure de détection (8, 9) - de l'impulsion de capteur.

5. Procédé selon l'une des revendications précédentes, **caractérisé en ce qu'**une modification de configuration prédéterminée, en particulier le réglage ou le montage d'un attelage de remorque (10) en position de fonctionnement, provoque un affaiblissement des valeurs de mesure de capteur (8, 9) par des effets d'ombre et de réflexion.

6. Procédé selon l'une des revendications précédentes, **caractérisé en ce que** la surveillance d'événements de service est conçue de manière que la détection de valeurs de mesure de capteur (8, 9), en particulier d'impulsions de capteur, n'est associée à aucun événement de service au-dessus d'un seuil supérieur (12) et/ou en dessous d'un seuil inférieur (13), et **en ce que** le seuil supérieur (12) et/ou le seuil inférieur (13) est ou sont modifié(s) en fonction de la configuration du véhicule automobile, de préférence **en ce que** le seuil supérieur (12) et/ou le seuil inférieur (13) est ou sont abaissé(s) lorsqu'un attelage de remorque (10) est réglé ou monté en position de fonctionnement.

7. Procédé selon l'une des revendications précédentes, **caractérisé en ce qu'**un jeu de caractéristiques d'événements de service constitué de valeurs caractéristiques de signal est associé à un événement de service, **en ce que**, dans le cadre de la surveillance d'événements de service, l'ensemble de commande (4) surveille si les valeurs de mesure de capteur (8, 9) correspondent aux valeurs caractéristiques de signal du jeu de caractéristiques d'événements de service, et **en ce que** le jeu de caractéristiques d'événements de service est généré en fonction de la configuration mécanique du véhicule automobile ou est sélectionné parmi un certain nombre de jeux de caractéristiques d'événements de service mémorisés en fonction de la configuration mécanique du véhicule automobile ou est paramétré en fonction de la configuration mécanique du véhicule automobile.

8. Procédé selon l'une des revendications précédentes, **caractérisé en ce qu'**au moins un événement de service génère un profil temporel en forme d'impulsions de valeurs de mesure de capteur (8, 9) d'au moins un élément capteur (6, 7) et **en ce qu'**au moins une valeur caractéristique de signal est ou sont définie(s) comme étant la largeur et/ou comme étant la hauteur et/ou comme étant la pente des fronts et/ou comme étant la courbure de parties des impulsions de capteur et/ou comme étant le décalage temporel de deux impulsions de capteur d'un élément capteur (6, 7).

9. Procédé selon l'une des revendications précédentes, **caractérisé en ce que**, dans le cadre de la surveillance d'événements de service, les valeurs de mesure de capteur (8, 9) sont déterminées au moyen de l'ensemble de commande (4) sur la base d'un procédé de traitement de signaux, **en ce que** le procédé de traitement de signaux est défini par un jeu de paramètres de traitement de signaux comportant des paramètres de traitement de signaux tels que des niveaux de signaux minimaux, la résolution temporelle de mesure ou la résolution de mesure en amplitude et **en ce que** le jeu de paramètres de traitement de signaux est sélectionné parmi un certain nombre de jeux de paramètres de traitement de signaux mémorisés en fonction de la configuration mécanique du véhicule automobile ou est paramétré en fonction de la configuration mécanique du véhicule automobile.

10. Procédé selon l'une des revendications précédentes, **caractérisé en ce que** la surveillance d'événements de service comprend une numérisation des valeurs de mesure de capteur (8, 9) et **en ce que** l'évaluation ultérieure des données de mesure numérisées, en particulier l'ajustement sur le jeu de caractéristiques d'événements de service, est effectuée sur la base d'un procédé d'évaluation, **en ce que** le procédé d'évaluation est défini par un jeu de paramètres d'évaluation comportant des paramètres d'évaluation tels que la précision de calcul ou le type d'algorithme d'ajustement, et **en ce que** le jeu de paramètres d'évaluation est sélectionné parmi un certain nombre de jeux de paramètres d'évaluation mémorisés en fonction de la configuration mécanique du véhicule automobile ou est paramétré en fonction de la configuration mécanique du véhicule automobile.

11. Procédé selon l'une des revendications précédentes, **caractérisé en ce que**, dans le cadre de la surveillance d'événements de service, l'ensemble capteur (5) est commandé au moyen de l'ensemble de commande (4) en fonction de la configuration mécanique du véhicule automobile, de préférence **en ce que** l'ensemble capteur (5) est disposé dans ou sur une partie de garniture arrière (11), en particulier sur le pare-chocs arrière (11) du véhicule automobile.

12. Procédé selon la revendication 11, **caractérisé en ce que** l'ensemble capteur (5) s'étend sur une partie notable de la largeur du véhicule automobile, **en ce que** l'ensemble capteur (5) est conçu de manière allongée et présente sur sa longueur au moins deux parties de capteur (5a, 5b, 5c) qui peuvent être commandées séparément l'une de l'autre au moyen de l'ensemble de commande (4) et **en ce que** les parties de capteur (5a, 5b, 5c) sont commandées individuellement, par groupes ou globalement en fonction de la configuration du véhicule automobile.

13. Procédé selon la revendication 12, **caractérisé en ce que** l'ensemble capteur (4) comporte des parties de capteur (5a, 5c) des deux côtés de l'attelage de remorque (10) et au moins une partie de capteur (5b) dans la zone de l'attelage de remorque (10) et **en ce que**, lorsque l'attelage de remorque (10) est réglé ou monté en position de fonctionnement, seules sont commandées les parties de capteur (5a, 5c) de l'ensemble de capteur (4) qui se trouvent des deux côtés de l'attelage de remorque (10) et **en ce que**, dans tous les cas, au moins une partie de capteur (5b) de l'ensemble capteur (4) qui se trouve dans la zone de l'attelage de remorque (10) est également commandée.

14. Ensemble de commande (4) destiné à la mise en œuvre d'un procédé selon l'une des revendications précédentes.
